# EUROPÄISCHE PATENTSCHRIFT

(11) **EP 2 808 142 B1**
(45) Veröffentlichungstag und Bekanntmachung des Hinweises auf die Patenterteilung: **11.09.2019**
(21) Anmeldenummer: 14165454.1
(22) Anmeldetag: 22.04.2014
(51) Int. Cl.: B28B 3/02, B30B 15/06

(54) **Auflastvorrichtung**
Applied load device
Dispositif de lestage

(30) Priorität: 21.04.2013 DE 102013104010
(43) Veröffentlichungstag der Anmeldung: 03.12.2014
(73) Patentinhaber: Rampf Formen GmbH, 89604 Allmendingen (DE)
(72) Erfinder: Wörz, Andreas, 89134 Blaustein (DE)
(74) Vertreter: Otten, Roth, Dobler & Partner mbB Patentanwälte

(56) Entgegenhaltungen:
- EP-A1- 0 749 815
- EP-A1- 1 136 211
- DE-A1- 19 600 185
- GB-A- 273 448

## Beschreibung

Die Erfindung betrifft eine Auflastvorrichtung entsprechend dem Oberbegriff des Anspruchs 1 bzw. 7.

Aus der DE 102 19 746 A1 ist eine Auflastvorrichtung bekannt, welche wenigstens eine Druckstempelvorrichtung umfasst, wobei die Druckstempelvorrichtung eine formstabile Druckplatte und ein Druckstück umfasst und wobei mit dem Druckstück zur Herstellung von Formsteinen auf Oberseiten von in Formnestern herstellbaren Formkörpern drückend einwirkbar ist.

Aus der EP 0 749 815 A1 ist eine Auflastvorrichtung bekannt, welche wenigstens eine Druckstempelvorrichtung umfasst, wobei die Druckstempelvorrichtung wenigstens eine formstabile Druckplatte und wenigstens ein Druckstück umfasst, wobei mit dem Druckstück zur Herstellung von Formsteinen auf Oberseiten von in Formnestern herstellbaren Formkörpern drückend einwirkbar ist und wobei die Druckstempelvorrichtung weiterhin wenigstens eine Aktuatoreinrichtung umfasst.

Weiterhin ist aus der GB 273 448 A eine Maschine zur Herstellung von Ziegeln bekannt, bei welcher vor einer Stirnwand der Form ein Band von einem Antrieb umlaufend oder hin- und hergehend aktiv bewegt wird oder von dem Ziegel beim Entformen passiv bewegt wird, wobei der Ziegel hierdurch ein Muster erhält.

Schließlich ist aus der EP 1 136 211 A1 eine Vorrichtung zur Herstellung von Keramikprodukten bekannt, bei welcher Keramikprodukten zwischen einem oberen und einem unteren Gürtel hergestellt werden, wobei der untere Gürtel von einem Stempel unter Zwischenlage von Pulver gegen den oberen Gürtel gedrückt wird.

Im Stand der Technik wird an einer Auflast ein Formoberteil befestigt. Das Formoberteil umfasst einen Stempelträger mit mindestens einem Stempelhals und einer an diesem angeordneten, mindestens einen Druckplatte. An der Druckplatte ist üblicherweise ein Druckstück angeordnet, welches die oberseitige Erscheinungsform des herzustellenden Betonformteils als Negativform aufweist. Das Druckstück drückt in die Formnester eines Formunterteils bei geschlossener Form ein und verdichtet den dort eingefüllten Beton bzw. das Gemisch. Dabei wird die im Druckstück vorgegebene Struktur aufgeprägt.

Die Struktur des Druckstücks wird in der Regel genutzt, um dem hergestellten Formteil ästhetische und technische Eigenschaften zu verleihen. Ästhetisch kann beispielsweise das Formteil die Ansicht eines möglichst natürlich wirkenden Steins erhalten. Technisch ist darauf zu achten, dass Stapelnocken oder Stapelbereiche vorhanden sind, so dass sich fertig ausgeformte Formteile, welche ausgehärtet sind, gut zu Paletten-Lagen aufeinander stapeln lassen, ohne zu verrutschen.

Im Zuge der Verlegung derartiger Formteile als Pflastersteine ist ein erhebliches Verlangen danach gegeben, dass sich die einzelnen hergestellten Paletten-Lagen untereinander unterscheiden, damit bei maschineller Verlegung ganze Lagen nebeneinander angeordnet werden können, ohne dass sich im Gesamteindruck Periodizitäten besonders auffällig darstellen.

Eine Möglichkeit, diesen Anforderungen gerecht zu werden besteht darin, die Oberflächenstrukturen der einzelnen Formteile durch Variation der Oberflächenstruktur der Druckstücke oder dergleichen von Produktionslage zu Produktionslage zumindest teilweise zu verändern.

Der Erfindung liegt die Aufgabe zugrunde, eine Auflastvorrichtung vorzuschlagen, welche dazu geeignet ist Formkörper mit unterschiedlichen Oberseiten herzustellen, durch welche naturähnliche Variationen der Gestaltung der Formsteinoberfläche bereitgestellt werden.

Diese Aufgabe wird ausgehend von den Merkmalen des Oberbegriffs des Anspruchs 1 durch die kennzeichnenden Merkmale des Anspruchs 1 gelöst sowie ausgehend von den Merkmalen des Oberbegriffs des Anspruchs 7 durch die kennzeichnenden Merkmale des Anspruchs 7 gelöst. In den jeweiligen Unteransprüchen sind vorteilhafte und zweckmäßige Weiterbildungen angegeben.

Weitere Einzelheiten der Erfindung werden in der Zeichnung anhand von schematisch dargestellten Ausführungsbeispielen beschreiben.

Hierbei zeigt:
- Figur 1:: eine Auflastvorrichtung entsprechend dem Stand der Technik;
- Figur 2a, 2b:: eine Druckstempelvorrichtung mit mehreren umlaufenden Gürteln in zwei Ansichten;
- Figur 3:: eine Druckplatte mit Druckstück mit variabler Oberflächenstruktur
- Figur 4:: ein Druckstück mit Durchbruch und Strukturstempel
- Figur 5:: ein Druckstück mit flexibler Deckschicht und Granulatfüllung
- Figur 6:: ein Druckstück mit rotierbarem Druckkörper

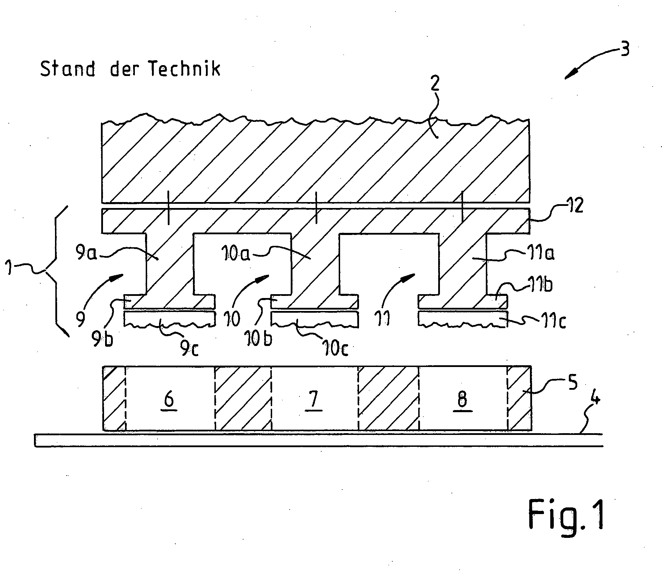

In der Figur 1 ist in schematischer Ansicht eine Auflastvorrichtung 1 entsprechend dem Stand der Technik dargestellt. Die Auflastvorrichtung 1 ist auswechselbar an einer Auflast 2 einer Steinformmaschine 3 befestigt und mit dieser vertikal verfahrbar. Unter der Auflastvorrichtung 1 ist eine auf einer Formunterlage 4 liegende Form 5 dargestellt, welche drei Formnester 6, 7, 8 aufweist, in welchen nicht dargestellte Formstein, insbesondere Betonformsteine herstellbar sind. Die Auflastvorrichtung 1 umfasst drei Druckstempelvorrichtungen 9, 10, 11, wobei jede Druckstempelvorrichtung 9, 10, 11 einen Stempelhals 9a, 10a, 11a eine formstabile Druckplatte 9b, 10b, 11b und eine Druckstück 9c, 10c, 11c umfasst. Hierbei werden die Druckstempelvorrichtungen 9, 10, 11 an ihren Stempelhälsen 9a, 10a, 11a von einer Tragplatte 12 der Auflastvorrichtung 1 gehalten. Mit den Druckstücken 9c, 10c, 11c wirken die Druckstempelvorrichtung 9, 10, 11 bei der Herstellung von Formsteinen in einem Rüttel- und Verdichtungsvorgang auf in den Formnestern 6, 7, 8 befindlichen - nicht dargestellten - Beton ein.

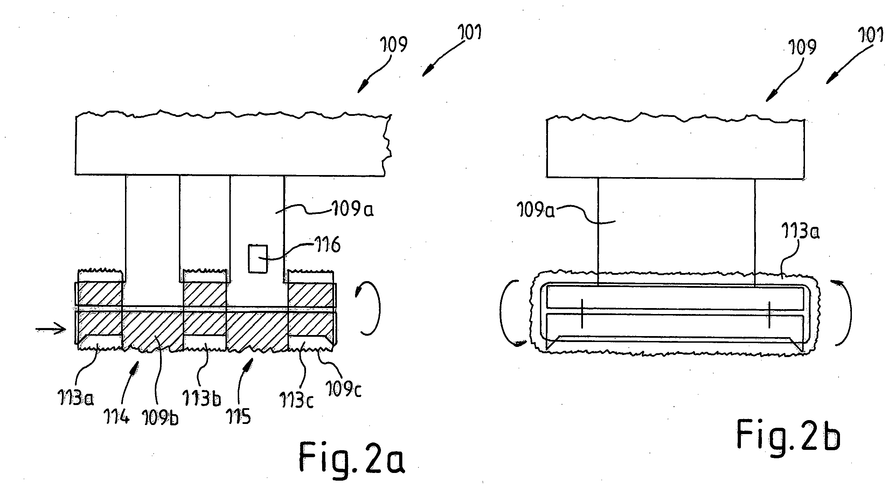

In den Figuren 2a und 2b ist schematisch eine Druckstempelvorrichtung 109 einer Auflastvorrichtung 101 in Frontansicht und Seitenansicht gezeigt. Die Druckstempelvorrichtung 109 umfasst einen Stempelhals 109a, eine formstabile Druckplatte 109b und eine Druckstück 109c. Hierbei umfasst das Druckstück 109c drei Gürtel 113a, 113b und 113c. Allgemein formuliert umfasst bei der gezeigten Variante und bei nicht dargestellten Ausführungsvarianten die Druckstempelvorrichtung 109 bzw. die Druckplatte 109b selbst einen oder mehrere umlaufende Gürtel.

Die Druckplatte 109b umfasst dabei weiterhin feste Strukturen 114, 115, welche beispielweise Ausprägungen für an einem Betonstein auszuformende Stapelnocken aufweisen und/oder als feste Druckpunkte die Verdichtung eines in einem Formnest herzustellenden Formsteins bzw. Formteils positiv beeinflussen. Darüber hinaus umfasst die Druckplatte 109b die drei, in Umgebung der festen Strukturen 114, 115 angeordnete Gürtel 113a, 113b und 113c, welche eine Oberflächenstruktur einer Oberseite des Formsteins abhängig von ihrer Drehstellung ausbilden bzw. verändern. Dies erfolgt, in dem die Gürtel 113a, 113b und 113c bzw. wenigstens einer der Gürtel 113a, 113b oder 113c von Hub zu Hub, also zwischen den Produktionsschritten umlaufend bewegt werden. Die Konturen der Gürtel 113a, 113b, 113c sollten dabei an die festen Strukturen 114, 115 angepasst werden, damit keine Stoßkanten entstehen. Zur Bewegung der Gürtel 113a, 113b und 113c um die Druckplatte 109b umfasst die Druckstempelvorrichtung 109 eine schematisch dargestellte Aktuatoreinrichtung 116, durch welche einer oder mehrere der Gürtel 113a, 113b und 113c raupenähnlich um die Druckplatte 109b um beliebige Streckenabschnitte drehbar sind.

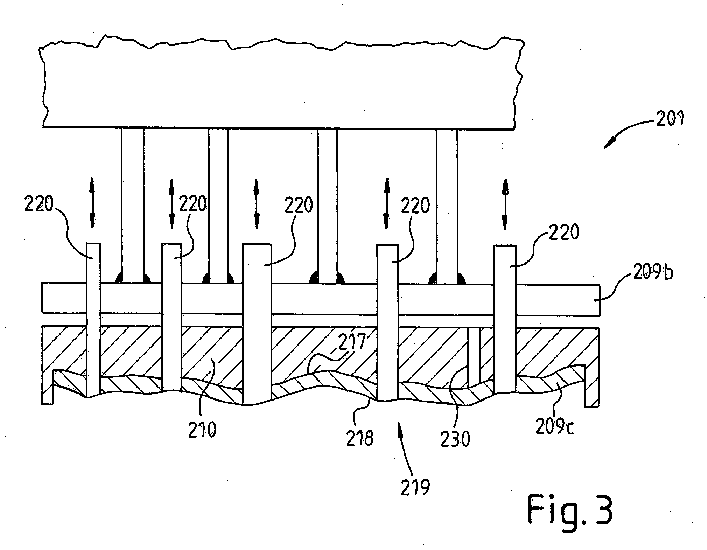

In der Figur 3 ist eine weitere Variante einer Druckstempelvorrichtung 201 gezeigt. Bei dieser Variante einer veränderbarer Oberflächenstruktur eines Druckstücks 209c ist die Möglichkeit gegeben, eine einer formstabilen Druckplatte 209b gegenüber liegende unterseitige Deckschickt 217 des Druckstücks 209c, welcher mit seiner Stirnseite 218 eine Oberflächenstruktur 219 wiedergibt und diese auf ein herzustellendes, nicht dargestelltes Formteil aufprägt, durch Verstellmittel 220 zu verändern. Dabei ist die Deckschickt 217 aus einem Material mit ausreichender Festigkeit sowie ausreichender Flexibilität zu wählen. Hierbei können Metallplatten dünner Wandstärke, Kunststoffschichten oder andere Materialien, ggf. auch mit vorstrukturierter Oberfläche genutzt werden. In Bevorzugter Weise ist in einem Zwischenraum 210, zwischen der Deckschicht 217 und der Rückseite des Druckstücks 209c ein Füllmaterial, beispielsweise ein Granulat oder Gel vorgesehen, welches die auftretenden Druckkräfte zwischen den Flächen überträgt.

Die Verstellmittel 220 können dabei die Oberflächenstruktur 219 des Druckstücks 209c von Produktionshub zu Produktionshub verändern. Relativ zu einer Druckplatte 209b feststehende Bereiche 230 (exemplarisch nur 1-fach eingezeichnet) des Druckstücks 209c können die Stapelnocken ausbilden.

Durch die elastische Strukturlage, deren Formgebung beeinflussbar ist, bieten sich je nach Wunsch leichte oder starke Variationsmöglichkeiten für die Oberflächenstruktur der resultierenden Formteile bzw. Betonsteine. Fixpunkte in Form von feststehenden Bereichen bieten die gewünschte technische Handhabungshilfe.

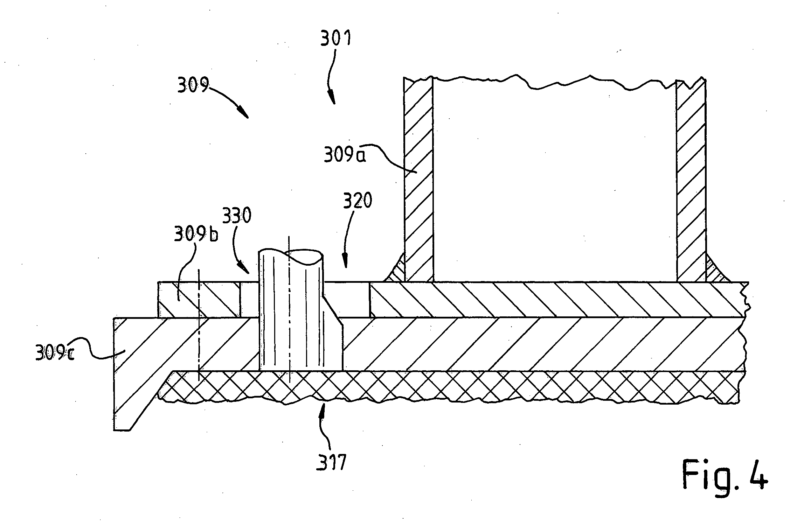

In der Figur 4 ist eine Druckstempelvorrichtung 309, umfassend eine formstabile Druckplatte 309b und ein Druckstück 309c dargestellt. Das Druckstück 309c ist mit mindestens einem partiellen Durchbruch 320 für mindestens einen vorzugsweise 2-stufigen Stempel 330 gezeigt. Die untere Deckschicht 317 ist ähnlich zu vorherigem Ausführungsbeispiel ausgebildet. In dieser Ausführungsvariante drückt der Stempel 330 entweder auf eine dünne Stahlplatte oder eine Kunststoffeinlage als Deckschicht 317 und verändert deren Geometrie bzw.

Oberflächenstruktur. Der Stempel 330 kann dabei sowohl horizontal als auch vertikal verfahren werden. Die Geometrieveränderung darf die Stapelnocken bzw. Stapelbereiche, welche ggf. fest im Sockel des Druckstücks 309c integriert sind, nicht beeinflussen.

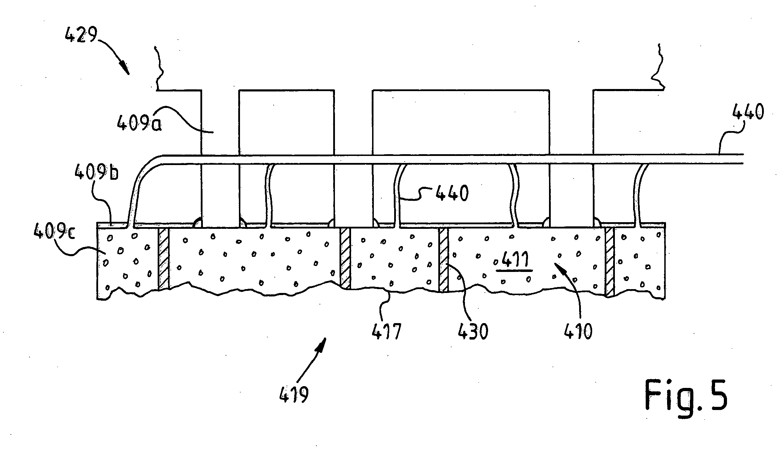

In der Figur 5 ist eine weitere Variante eines Druckstücks 409c gezeigt, welche in Analogie zur den in den Figuren 3 und 4 dargestellten Varianten ebenfalls eine flexible Deckschicht 417 zur Bildung der Oberflächenstruktur aufweist. Die dargestellte Druckstempelvorrichtung 409 umfasst eine formstabile Druckplatte 409b und ein Druckstück 409c. Erfindungsgemäß ist hinter dieser Deckschicht 417 ein Granulat 410 vorgesehen. Das Granulat 410 kann aus Kunststoff, Metall oder anderen Materialien bestehen. Diese Ausführungsform beruht auf einer Technologie, welche z.B. in Rettungsmatten Anwendung findet. Dabei wird in einen Hohlraum 411 ein relativ leicht bewegliches Granulat 410 aufgenommen, welches sodann in eine beliebige Raumfüllung positioniert bzw. gedrückt oder gerüttelt wird. Im Anwendungsfall eines Druckstücks 409c zur Herstellung von Betonformteilen ist es vorteilhaft, wenn im Inneren des Hohlraums 411 Zwischenwände oder Fixstrukturen 430 vorgesehen sind, so das sich beispielsweise beim Schütteln des Druckstücks 409c oder des Formoberteils das Granulat darin statistisch verteilen kann. Anschließend wird der Hohlraum 411 mit einem Vakuum / Unterdruck über eine oder mehrere Vakuumleitungen 440 beaufschlagt, so dass sich das darin enthaltene Granulat aufgrund der Kompression mit der Decklage 417 verdichtet und eine feste, druckstabile Struktur bildet.

Eine analoge Technologie wird in Rettungsmatten genutzt, um einen zu sichernden Körper in seiner eingelegten Haltung zu fixieren. Auf die diesbezügliche Funktionsoffenbarung wird Bezug genommen.

Durch die auf diese Weise hergestellte statistische Oberfläche 419 und die im Bereich der feststehenden Trennwände 430 zur Verfügung stehenden Stapelnocken kann auch auf diese Weise ein erfindungsgemäßes Variationsbild der Oberflächenstruktur von Formteilen, beispielsweise Betonformsteinen herbeigeführt werden.

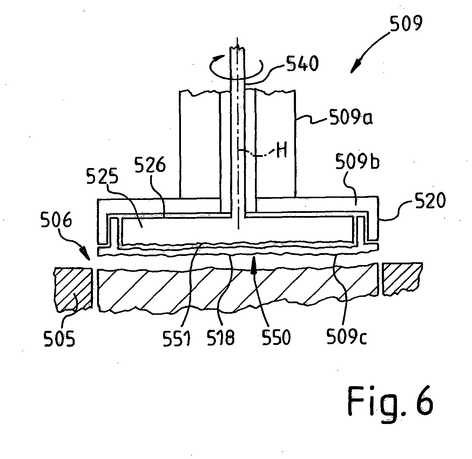

In der Figur 6 ist eine weitere Ausführungsvariante einer Druckstempelvorrichtung 509 im Schnitt dargestellt, wobei zur Erhaltung der Übersichtlichkeit auf einen Schraffur der geschnittenen Bauteile verzichtet wurde. Die Druckstempelvorrichtung 509 umfasst eine formstabile Druckplatte 509b und ein Druckstück 509c. Hierbei umfasst die formstabile Druckplatte 509b eine Druckwanne 520 in der Form einer nach unten gewendeten Wanne und einen Druckkörper 525, welcher in einem Aufnahmeraum 526 der Druckwanne 520 aufgenommen ist. Der Aufnahmeraum 526 der Druckwanne 520 ist rotationssymmetrisch ausgebildet, so dass der ebenfalls rotationssymmetrische Druckkörper 525 in dem Aufnahmeraum 526 drehbar ist. Die Druckstempelvorrichtung 509 umfasst einen Stempelhals 509a, wobei dieser von einer Welle 540 durchlaufen ist, welche mit dem Druckkörper 525 verbunden ist und diesen bei einer Drehung um eine Hochachse H antreibt. Der Kontaktkörper 509c überspannt den Druckkörper 525 und schließt die Druckstempelvorrichtung 509 nach unten hin ab. Hierbei ist der Kontaktkörper 509c aus einem elastischen Material gebildet, welches durch eine Struktur 550 einer Druckfläche 551 des Druckkörpers 525 derart verformt wird, dass eine Strinseite 518 des Kontaktkörpers 509c die Struktur 550 des Druckkörpers 525 nachbildet. Durch eine Drehung des Druckköpers 525 um einen von 360° abweichenden Drehwinkel lässt sich die Orientierung der Struktur 550, mit welcher die Druckfläche 551 des Kontaktkörpers 509c und damit die Stirnseite 518 dann auf in einem Formnest 506 einer Form 505 befindlichen Beton einwirkt mit unterschiedlich ausgerichteter Struktur erzielen.

### Bezugszeichenliste:

- 1.: Auflastvorrichtung
- 2.: Auflast
- 3.: Steinformmaschine
- 4.: Formunterlage
- 5.: Form
- 6.: Formnest
- 7.: Formnest
- 8.: Formnest
- 9.: Druckstempelvorrichtung
- 9a.: Stempelhals
- 9b.: Druckplatte
- 9c.: Druckstück
- 10.: Druckstempelvorrichtung
- 10a.: Stempelhals
- 10b.: Druckplatte
- 10c.: Druckstück
- 11.: Druckstempelvorrichtung
- 11a.: Stempelhals
- 11b.: Druckplatte
- 11c.: Druckstück

- 101.: Auslastvorrichtung
- 109.: Druckstempelvorrichtung
- 109a.: Stempelhals
- 109b.: Druckplatte
- 109c.: Druckstück
- 113a.: Gürtel
- 113b.: Gürtel
- 113c.: Gürtel
- 114.: Strukturen
- 115.: Strukturen
- 116.: Aktuatoreinrichtung
- 209.: Druckstempelvorrichtung
- 209b.: Druckplatte
- 209c.: Druckstück
- 217.: Deckschicht
- 218.: Stirnseite
- 219.: Oberflächenstruktur
- 220.: Verstellmittel
- 309.: Druckstempelvorrichtung
- 309b.: Druckplatte
- 309c.: Druckstück
- 230.: Bereiche
- 317.: Deckschicht
- 320.: Durchbruch
- 330.: Stempel
- 409.: Druckstempelvorrichtung
- 409b.: Druckplatte
- 409c.: Druckstück
- 410.: Granulat
- 411.: Hohlraum
- 417.: Deckschicht
- 419.: Oberfläche
- 430.: Fixstrukturen/Trennwände
- 440.: Vakuumleitungen
- 505.: Formnest
- 506.: Formnest
- 509.: Druckstempelvorrichtung
- 509b.: Druckplatte
- 509c.: Kontaktkörper
- 518.: Stirnseite
- 520.: Druckwanne
- 525.: Druckkörper
- 526.: Aufnahmeraum
- 550.: Struktur
- 551.: Druckfläche

## Patentansprüche

1. Auflastvorrichtung (1) umfassend
- wenigstens eine Druckstempelvorrichtung (209; 309; 409; 509),
- wobei die Druckstempelvorrichtung (209; 309; 409; 509) wenigstens eine formstabile Druckplatte (209b; 309b; 409b; 509b) und wenigstens ein Druckstück (209c; 309c; 409c; 509c) umfasst,
- wobei mit dem Druckstück (209c; 309c; 409c; 509c) zur Herstellung von Formsteinen auf Oberseiten von in Formnestern (505, 506) herstellbaren Formkörpern drückend einwirkbar ist,
- wobei die Druckstempelvorrichtung (209; 309; 409; 509) weiterhin wenigstens eine Aktuatoreinrichtung (116) umfasst,
- dass das Druckstück (209c; 309c; 409c; 509c) durch die Aktuatoreinrichtung derart veränderbar ist,
- dass eine erste druckstabile dreidimensionale Form, welche das Druckstück (209c; 309c; 409c; 509c) unterhalb der Druckplatte (209b; 309b; 409b; 509b) zu dem Formnest (505, 506) hin einnimmt, derart durch die Aktuartoreinrichtung veränderbar ist,
- dass das Druckstück (209c; 309c; 409c) wenigstens eine zweite druckstabile dreidimensionale Form aufweist, welche sich von der ersten oder den anderen druckstabilen dreidimensionalen Formen des Kontaktkörpers derart unterschiedet,
- dass mit der zweiten druckstabilen dreidimensionalen Form des Kontaktkörpers ein zweiter Formstein herstellbar ist, welcher eine Oberseite aufweist, welche in ihrer dreidimensionalen Struktur, von einer Oberseite eines ersten Formsteins zumindest teilweise abweicht, welcher mit der ersten druckstabilen dreidimensionalen Form des Kontaktkörpers (509c) herstellbar ist,
**dadurch gekennzeichnet,**
**dass** die Aktuatoreinrichtung wenigstens ein Verstellmittel (220) umfasst, dass das Druckstück (209c; 309c; 409c; 509c) eine Deckschicht (217; 317; 417) umfasst und dass die Verstellmittel (220) zwischen der Druckplatte (209b; 309b; 409b; 509b) und der Deckschicht (217; 317; 417) wirkend angeordnet sind, wobei das Druckstück (209c; 309c; 409c; 509c) in einer ersten Wirkung des Verstellmittels (220) die erste druckstabile dreidimensionale Form einnimmt und wobei das Druckstück (209c; 309c; 409c; 509c) in einer weiteren Wirkung des Verstellmittels (220) die weitere druckstabile dreidimensionale Form einnimmt.

2. Auflastvorrichtung nach Anspruch 1, **dadurch gekennzeichnet, dass** das bzw. die Verstellmittel als Hubstift oder verdrehbare Nockenwelle oder verschiebbare Einlagen oder Granulat (410) ausgebildet sind

3. Auflastvorrichtung nach Anspruch 1, **dadurch gekennzeichnet, dass** das bzw. die Verstellmittel als Granulat (410) in einem Hohlraum (411) ausgebildet sind, und zur Bereitstellung der Wirkung ein Unterdruck, nämlich ein Vakuum auf den Hohlraum (411) einwirkt, so dass das Granulat (410) durch die Kompression zwischen Druckplatte (409b) und Deckschicht (417) verdichtet fixierbar ist.

4. Auflastvorrichtung nach Anspruch 1, **dadurch gekennzeichnet, dass** die Aktuatoreinrichtung wenigstens ein Verstellmittel umfasst, dass das Druckstück (509c) eine Stirnseite (518) umfasst und dass die Verstellmittel einen angeordneten Druckkörper (525) zwischen der Druckplatte (509b) und der Stirnseite (518) bewegen, wobei der Druckkörper (525) in einer ersten Stellung des Verstellmittels die erste druckstabile dreidimensionale Form als Orientierung gegenüber der Stirnseite (518) einnimmt und wobei der Druckkörper (525) in einer weiteren Stellung des Verstellmittels die weitere druckstabile dreidimensionale Form als Orientierung gegenüber der Stirnseite (518) einnimmt.

5. Auflastvorrichtung nach Anspruch 4, **dadurch gekennzeichnet, dass** die Verstellmittel einen angeordneten Druckkörper (525) zwischen der Druckplatte (509b) und der Stirnseite (518) drehen.

6. Auflastvorrichtung nach Anspruch 4 oder 5, **dadurch gekennzeichnet, dass** das bzw. die Verstellmittel als Drehantrieb und/oder Querschieber ausgebildet ist.

7. Auflastvorrichtung umfassend
- wenigstens eine Druckstempelvorrichtung (9, 10, 11; 109),
- wobei die Druckstempelvorrichtung (9, 10, 11; 109) wenigstens eine formstabile Druckplatte (9b, 10b, 11b; 109b) und wenigstens ein Druckstück (9c, 10c, 11c; 109c) umfasst,
- wobei mit dem Druckstück (9c, 10c, 11c; 109c) zur Herstellung von Formsteinen auf Oberseiten von in Formnestern (6, 7, 8) herstellbaren Formkörpern drückend einwirkbar ist,
- wobei die Druckstempelvorrichtung (9, 10, 11; 109) weiterhin wenigstens eine Aktuatoreinrichtung (116) umfasst,
- dass das Druckstück (9c, 10c, 11c; 109c) durch die Aktuatoreinrichtung (116) derart veränderbar ist,
- dass eine erste druckstabile dreidimensionale Form, welche das Druckstück (9c, 10c, 11c; 109c) unterhalb der Druckplatte (9b, 10b, 11b; 109b) zu dem Formnest (6, 7, 8) hin einnimmt, derart durch die Aktuartoreinrichtung (116) veränderbar ist,
- dass das Druckstück (9c, 10c, 11c; 109c) wenigstens eine zweite druckstabile dreidimensionale Form aufweist, welche sich von der ersten oder den anderen druckstabilen dreidimensionalen Formen des Kontaktkörpers derart unterschiedet,
- dass mit der zweiten druckstabilen dreidimensionalen Form des Kontaktkörpers ein zweiter Formstein herstellbar ist, welcher eine Oberseite aufweist, welche in ihrer dreidimensionalen Struktur, von einer Oberseite eines ersten Formsteins zumindest teilweise abweicht, welcher mit der ersten druckstabilen dreidimensionalen Form des Kontaktkörpers herstellbar ist,
**dadurch gekennzeichnet, dass** das Druckstück (109c) größer als eine Unterseite der Druckplatte (109b) ist und dass die Aktuartoreinrichtung (116) das Druckstück (109c) zumindest anteilig aus einer ersten Stellung, welche dieses gegenüber der Unterseite der Druckplatte (109b) einnimmt, in eine zweite Stellung verschiebt, welche dieses gegenüber der Druckplatte (109b) einnimmt.

8. Auflastvorrichtung nach Anspruch 7, **dadurch gekennzeichnet, dass** das Druckstück (109c) mehrteilig ausgebildet ist.

9. Auflastvorrichtung nach Anspruch 8, **dadurch gekennzeichnet, dass** das Druckstück (109c) anteilig als Gürtel (113a, 113b, 113c) oder Schieber ausgebildet ist.

## Claims

1. Applied load device (1) comprising:
- at least one pressure plunger device (209; 309; 409; 509),
- the pressure plunger device (209; 309; 409; 509) comprising at least one dimensionally stable pressure plate (209b; 309b; 409b; 509b) and at least one pressure piece (209c; 309c; 409c; 509c),
- it being possible, by using the pressure piece (209c; 309c; 409c; 509c), to act with pressure on upper sides of mouldings that can be produced in mould cavities (505, 506) to produce moulded blocks,
- the pressure plunger device (209; 309; 409; 509) further comprising at least one actuator unit (116),
- the pressure piece (209c; 309c; 409c; 509c) being variable by the actuator unit in such a way
- that a first pressure-stable three-dimensional shape assumed by the pressure piece (209c; 309c; 409c; 509c) underneath the pressure plate(209b; 309b; 409b; 509b) relative to the mould cavity (505, 506) can be varied by the actuator unit in such a way,
- that the pressure piece (209c; 309c; 409c) has at least a second pressure-stable three-dimensional shape which differs from the first or the other pressure-stable three-dimensional shapes of the contact body, in such a way
- that with the second pressure-stable three-dimensional shape of the contact body, a second moulded block can be produced which has an upper side which, in its three-dimensional structure, at least partly differs from an upper side of a first moulded block which can be produced with the first pressure-stable three-dimensional shape of the contact body (509c),
**characterized**
**in that** the actuator unit comprises at least one displacement means (220), in that the pressure piece (209c; 309c; 409c; 509c) comprises a covering layer (217; 317, 417) and in that the displacement means (220) is arranged so as to act between the pressure plate (209b; 309b; 409b; 509b) and the covering layer (217; 317, 417), wherein in a first action of the displacement means (220) the pressure piece (209b; 309b; 409b; 509b) assumes the first pressure-stable three-dimensional shape, and wherein in a further action of the displacement means (220) the pressure piece (209c; 309c; 409c; 509c) assumes the further pressure-stable three-dimensional shape.

2. Applied load device according to Claim 1, **characterized in that** the displacement means is formed as a lifter pin or rotatable camshaft or displaceable inlays or granules (410).

3. Applied load device according to Claim 1, **characterized in that** the displacement means is formed as granules (410) in a hollow chamber (411) and, and in order to provide the action, a negative pressure, specifically a vacuum, acts on the hollow chamber (411), so that the granules (410) can be fixed in a compressed manner by the compression between pressure plate (409b) and covering layer (417) .

4. Applied load device according to Claim 1, **characterized in that** the actuator unit comprises at least one displacement means, **in that** the pressure piece (509c) comprises a front face (518), and **in that** the displacement means move a provided pressure element (525) between the pressure plate (509b) and the front face (518), wherein in a first position of the displacement means the pressure element (525) assumes the first pressure-stable three-dimensional shape as an orientation relative to the front face (518), and wherein in a further position of the displacement means the pressure element (525) assumes the further pressure-stable three-dimensional shape as an orientation relative to the front face (518).

5. Applied load device according to Claim 4, **characterized in that** the displacement means rotate a provided pressure element (525) between the pressure plate (509b) and the front face (518).

6. Applied load device according to Claim 4 or 5, **characterized in that** the displacement means is formed as a rotary drive and/or transverse slide.

7. Applied load device comprising:
- at least one pressure plunger device (9, 10, 11; 109),
- the pressure plunger device (9, 10, 11; 109) comprising at least one dimensionally stable pressure plate (9b, 10b, 11b; 109b) and at least one pressure piece (9c, 10c, 11c; 109c),
- it being possible, by using the pressure piece (9c, 10c, 11c; 109c), to act with pressure on upper sides of mouldings that can be produced in mould cavities (6, 7, 8) to produce moulded blocks,
- the pressure plunger device (9, 10, 11; 109) further comprising at least one actuator unit (116),
- the pressure piece (9c, 10c, 11c; 109c) being variable by the actuator unit (116) in such a way
- that a first pressure-stable three-dimensional shape assumed by the pressure piece (9c, 10c, 11c; 109c) underneath the pressure plate (9b, 10b, 11b; 109b) relative to the mould cavity (6, 7, 8) can be varied by the actuator unit (116) in such a way,
- that the pressure piece (9c, 10c, 11c; 109c) has at least a second pressure-stable three-dimensional shape which differs from the first or the other pressure-stable three-dimensional shapes of the contact body, in such a way
- that with the second pressure-stable three-dimensional shape of the contact body, a second moulded block can be produced which has an upper side which, in its three-dimensional structure, at least partly differs from an upper side of a first moulded block which can be produced with the first pressure-stable three-dimensional shape of the contact body,
**characterized in that** the pressure piece (109c) is larger than an underside of the pressure plate (109b), and **in that** the actuator unit (116) displaces the pressure piece (109c) at least partly from a first position, which the latter assumes relative to the underside of the pressure plate (109b), into a second position, which the latter assumes relative to the pressure plate (109b).

8. Applied load device according to Claim 7, **characterized in that** the pressure piece (109c) is formed in multiple parts.

9. Applied load device according to Claim 8, **characterized in that** the pressure piece (109c) is proportionately formed as a belt (113, 113b, 113c) or as a slider.

## Revendications

1. Dispositif de lestage (1) comprenant
- au moins un dispositif de tampon de pression (209; 309; 409; 509),
- dans lequel le dispositif de tampon de pression (209; 309; 409; 509) comprend au moins une plaque de pression de forme stable (209b; 309b; 409b; 509b) et au moins une pièce de pression (209c; 309c; 409c; 509c),
- dans lequel on peut agir par pression avec la pièce de pression (209c; 309c; 409c; 509c) sur des côtés supérieurs de corps moulés à fabriquer dans des cavités de moulage (505, 506) pour la fabrication de pièces moulées,
- dans lequel le dispositif de tampon de pression (209; 309; 409; 509) comprend en outre au moins un dispositif d'actionneur (116),
- dans lequel la pièce de pression (209c; 309c; 409c; 509c) peut être modifiée au moyen du dispositif d'actionneur, de telle manière que
- une première forme tridimensionnelle stable à la pression, que la pièce de pression (209c; 309c; 409c; 509c) prend en dessous de la plaque de pression (209b; 309b; 409; 509b) en direction de la cavité de moule (505, 506), peut être modifiée au moyen du dispositif d'actionneur, de telle manière que
- la pièce de pression (209c; 309c; 409c) présente au moins une deuxième forme tridimensionnelle stable à la pression, qui diffère de la première ou des autres forme(s) tridimensionnelle (s) stable(s) à la pression du corps de contact, de telle manière que
- avec la deuxième forme tridimensionnelle stable à la pression du corps de contact, on puisse fabriquer une deuxième pièce moulée, qui présente un côté supérieur qui s'écarte au moins en partie par sa structure tridimensionnelle d'un côté supérieur d'une première pièce moulée, qui peut être fabriquée avec la première forme tridimensionnelle stable à la pression du corps de contact (509c),
**caractérisé en ce que** le dispositif d'actionneur comprend au moins un moyen de réglage (220), **en ce que** la pièce de pression (209c; 309c; 409c; 509c) comprend une couche de recouvrement (217; 317; 417) et **en ce que** les moyens de réglage (220) sont disposés de façon active entre la plaque de pression (209b; 309b; 409b; 509b) et la couche de recouvrement (217; 317; 417), dans lequel la pièce de pression (209c; 309c; 409c; 509c) prend sous une première action du moyen de réglage (220) la première forme tridimensionnelle stable à la pression et dans lequel la pièce de pression (209c; 309c; 409c; 509c) prend sous une autre action du dispositif de réglage (220) l'autre forme tridimensionnelle stable à la pression.

2. Dispositif de lestage selon la revendication 1, **caractérisé en ce que** le ou les moyen (s) de réglage est/sont formé (s) par une tige de levage ou un arbre à cames rotatif ou des inserts déplaçables ou un granulat (410).

3. Dispositif de lestage selon la revendication 1, **caractérisé en ce que** le ou les moyen (s) de réglage est/sont formés(s) par un granulat (410) dans une cavité (411), et pour créer l'effet, une dépression, notamment un vide, agit sur la cavité (411), de telle manière que le granulat (410) puisse être fixé de façon comprimée par la compression entre la plaque de pression (409b) et la couche de recouvrement (417).

4. Dispositif de lestage selon la revendication 1, **caractérisé en ce que** le dispositif d'actionneur comprend au moins un moyen de réglage, **en ce que** la pièce de pression (509c) comprend un côté frontal (518), et **en ce que** les moyens de réglage déplacent un corps de pression disposé (525) entre la plaque de pression (509b) et le côté frontal (518), dans lequel le corps de pression (525) prend dans une première position du moyen de réglage la première forme tridimensionnelle stable à la pression comme orientation par rapport au côté frontal (518) et dans lequel le corps de pression (525) prend dans une autre position du moyen de réglage l'autre forme tridimensionnelle stable à la pression comme orientation par rapport au côté frontal (518).

5. Dispositif de lestage selon la revendication 4, **caractérisé en ce que** les moyens de réglage font tourner un corps de pression disposé (525) entre la plaque de pression (509b) et le côté frontal (518).

6. Dispositif de lestage selon une revendication 4 ou 5, **caractérisé en ce que** le ou les moyen (s) de réglage est/sont formé(s) par un entraînement rotatif et/ou par un coulisseau transversal.

7. Dispositif de lestage comprenant
- au moins un dispositif de tampon de pression (9, 10, 11; 109),
- dans lequel le dispositif de tampon de pression (9, 10, 11; 109) comprend au moins une plaque de pression de forme stable (9b, 10b, 11b; 109b) et au moins une pièce de pression (9c, 10c, 11c; 109c),
- dans lequel on peut agir par pression avec la pièce de pression (9c, 10c, 11c; 109c) sur des côtés supérieurs de corps moulés à fabriquer dans des cavités de moulage (6, 7, 8) pour la fabrication de pièces moulées,
- dans lequel le dispositif de tampon de pression (9, 10, 11; 109) comprend en outre au moins un dispositif d'actionneur (116),
- dans lequel la pièce de pression (9c, 10c, 11c; 109c) peut être modifiée au moyen du dispositif d'actionneur (116), de telle manière que
- une première forme tridimensionnelle stable à la pression, que la pièce de pression (9c, 10c, 11c; 109c) prend en dessous de la plaque de pression (9b, 10b, 11b; 109b) en direction de la cavité de moule (6, 7, 8), peut être modifiée au moyen du dispositif d'actionneur (116), de telle manière que
- la pièce de pression (9c, 10c, 11c; 109c) présente au moins une deuxième forme tridimensionnelle stable à la pression, qui diffère de la première ou des autres forme(s) tridimensionnelle(s) stable(s) à la pression du corps de contact, de telle manière que
- avec la deuxième forme tridimensionnelle stable à la pression du corps de contact, on puisse fabriquer une deuxième pièce moulée, qui présente un côté supérieur qui s'écarte au moins en partie par sa structure tridimensionnelle d'un côté supérieur d'une première pièce moulée, qui peut être fabriquée avec la première forme tridimensionnelle stable à la pression du corps de contact,
**caractérisé en ce que** la pièce de pression (109c) est plus grande qu'un côté inférieur de la plaque de pression (109b) et **en ce que** le dispositif d'actionneur (116) déplace la pièce de pression (109c), au moins en partie d'une première position, que celle-ci occupe par rapport au côté inférieur de la plaque de pression (109b), à une deuxième position, que celle-ci occupe par rapport à la plaque de pression (109b).

8. Dispositif de lestage selon la revendication 7, **caractérisé en ce que** la pièce de pression (109c) est réalisée en plusieurs parties.

9. Dispositif de lestage selon la revendication 8, **caractérisé en ce que** la pièce de pression (109c) est réalisée en partie sous forme de ceinture (113a, 113b, 113c) ou de coulisseau.
